# EUROPEAN PATENT SPECIFICATION

(11) **EP 0 598 683 B1**
(45) Date of publication and mention of the grant of the patent: **12.06.1996**
(21) Application number: 93830378.1
(22) Date of filing: 14.09.1993
(51) Int. Cl.: G01M 15/00, F02D 41/40

(54) **A method for the adjustment of an electronic control system for the fuel supply to a diesel-cycle engine installed on a motorvehicle**
Methode zur Einstellung eines elektronischen Kontrollsystems zur Kraftstoffeinspeisung einer Dieselmaschine, installiert in einem Fahrzeug
Procédé de réglage d'un système de contrôle électronique de l'alimentation en combustible d'un moteur à carburant diesel installé dans un véhicule à moteur

(30) Priority: 17.11.1992 IT TO920926
(43) Date of publication of application: 25.05.1994
(73) Proprietor: IVECO FIAT S.p.A., I-10156 Torino (IT)
(72) Inventor: Schöni, Andreas, CH-9315 Neukirch-Egnach (CH)
(74) Representative: Buzzi, Franco

(56) References cited:
- EP-A- 0 014 603
- DE-C- 3 914 723
- US-A- 4 166 437
- PATENT ABSTRACTS OF JAPAN vol. 15, no. 286 (M-1138)19 July 1991 & JP-A-13 000 361 (MAZDA MOTOR CO) 25 April 1991

## Description

The present invention is related to electronic control systems for the fuel supply to a diesel-cycle engine, of the type comprising an electronically controlled injection pump having regulator means of the fuel rate of flow, sensor means of operative parameters and working conditions of the engine, including engine rotation speed, intake air quantity and exhaust gas recirculation, and an electronic unit operatively connected to said pump and sensor means and adapted to control functions related to the amount of fuel injected by the injection pump.

In the production of vehicles with diesel engine provided with such electronically controlled fuel supply systems, the problem exists of a correct setting of the electronic regulation unit in order to comply with the standards concerning emissions of pollutants in the exhaust gas of the engine.

Traditionally the setting, in terms of regulations of the amount of the injected fuel, of the injection point and of the exhaust gas recirculation, if any, is accomplished by coupling with each other the main elements of the system (injection pump, injectors, regulating electronic unit and air flowmeter) during the release phase of the engine on the test bench: during such a phase, the relevant parameters are monitored by means of sensors external to the system and such relevant parameters are then set acting on the control unit. In case components which have not previously been coupled, during assembling of the vehicle or during maintenance, the amount of the fuel actually injected may be different from the required one, with a behaviour in connection with emissions of pollutants in the exhaust gas anything but corresponding to the ideal one.

In order to avoid this drawback, the present invention provides a method for the regulation of a supply system of the above-referenced type, which is adapted to be carried out in an extremely simple and economical way at the end of the vehicle assembly line, i.e. following installation of the engine, as well as during maintenance of the vehicle.

The method according to the invention is characterized by the fact that it comprises the following steps:
- starting and warming up the engine,
- maintaining the engine rotation speed at elevated idle speed,
- measuring the concentration of carbon dioxide within the engine exhaust gas,
- comparing the measured carbon dioxide value with a reference value and obtaining from the comparison a difference, if any,
- modifying at least one of the said functions controlled by the electronic unit, until the said difference is substantially annulled.

The term "elevated idle speed" is to be intended as relating to an operating area of the engine wherein the air-fuel ratio stored in the maps of the regulating control unit is constant. In this case dispersions of consumption in the check point (due to organic and fluid-dynamics losses) will modify the point on the consumption-rpm map, but not the resulting air-fuel ratio.

The invention is based on the ascertainment that the diesel fuel consists mainly of carbon (C) and hydrogen (H). An average formula in weight percentage of the diesel fuel is 86% C, 13% H. During combustion with air mainly CO₂ and water are formed: therefore, a direct relationship subsists between the ratio air-fuel and the CO₂ concentration in the exhaust gas.

Since in a thermically steady state and idle speed diesel engine the CO and HC emissions are normally not exceeding 200 ppm (= 0,02 %), such substances can be neglected for a CO₂ concentration of approximately 4%.

Due to the direct relationship of the ratio air-fuel with the CO₂ concentration in the exhaust stream, it is possible to detect a deviation of the fuel quantity actually injected with respect to the required amount, by means of a comparison between the measured and the theoretical CO₂ concentration in the exhaust gas.

The amount of required fuel is calculated as a function of the gas pedal position, of the engine speed and temperature thereof, of the rate of flow of the intake air and of other parameters.

The parameter corresponding to the fuel quantity to be injected derives from calculation, according to appropriate algorithms, of values stored in the various maps related to the instant entities of the operating variables: such a parameter is both calculated and controlled by the regulating electronic unit of the supply system.

In order to correct the air-fuel ratio originating the CO₂ value, so as to bring it back to the required value, it is possible to act either on the amount of injected fuel or on the amount of air actually intaken.

In the former case the intervention consists of modifying the amplitude of the value which corresponds to the signal of the position sensor of the fuel supply regulating device: if the value of CO₂ is in excess, the value of the signal corresponding to a predetermined rate of flow is increased according to a corrective coefficient equal to the percentage in excess of CO₂.

In the latter case, since the engine is of the volumetric type without interception devices of the air flow rate, intervention is directed to the (normally existing) exhaust gas recirculation apparatus (EGR system), i.e. on the percentage of the exhaust gas recirculated into the engine intake, and thus, again in case of excessive CO₂ percentage, decreasing same with a consequent increase of intake air.

Alternatively, it is possible to intervene on the value of the signal fed by the intake air meter (flowmeter), through which the valve of the EGR system is fed back with a correction inversally proportional to the percentage in excess of CO₂.

In all three cases the variation of the parameters of the function controlled by the regulating electronic unit is completed as soon as the concentration of CO₂ detected in the exhaust gas corresponds to the optimal value (around 4%).

The invention will now be described in detail with reference to the annexed drawing provided purely by way of non limiting example, which shows diagramatically the regulating system according to the invention.

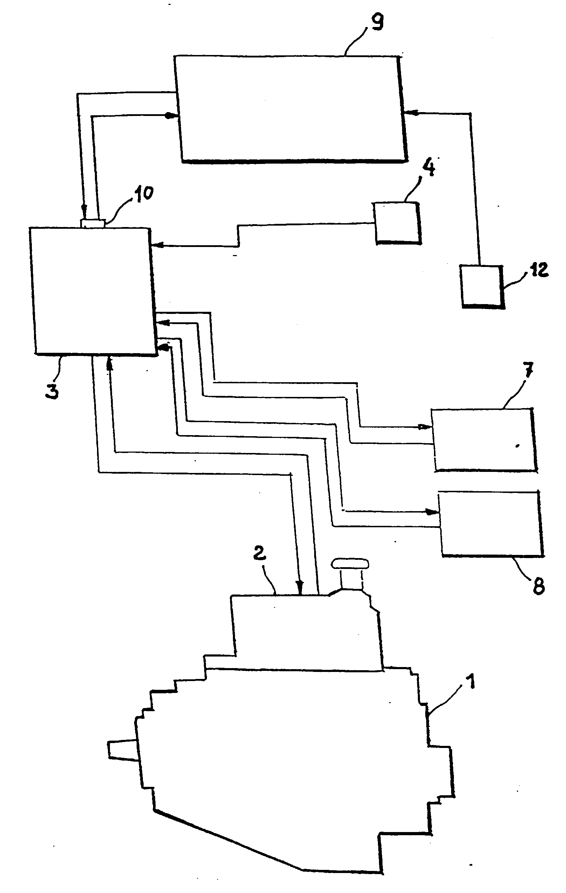

In the drawing, reference numeral 1 generally designates as a whole an electronically regulated distributor pump used in a fuel injection apparatus for a diesel-cycle engine installed on board a motorvehicle, for instance an industrial or commercial vehicle.

The pump 1 is generally per se known, and will not be therefore described in detail: as far as the present invention is concerned, it is sufficient to clarify that same is provided with a regulating slider piloted by means of an electromagnetic actuator for controlling the operative stroke of the pumping element, and thus the amount of injected fuel.

The electromagnetic actuator of pump 1, housed within a section 2 of the pump, is in term controlled by an electronic unit 3 receiving signals indicative of the position of the regulating slider, through a sensor associated with such a slider in a way known per se.

The unit 3 is further connected to a series of sensors and transducers recording environmental and operating parameters of the engine and of the vehicles on which the engine is installed, among which a sensor of the engine rotation speed 4, sensors (not shown) of the air temperature in the air flowmeter, of the temperature of the cooling liquid of the engine and of the temperature of the fuel in the injection pump. Normally, further sensors are provided for (for instance to detect the position of the gas pedal, the position of the crankshaft, the pressure of turbosupercharge air, if any) which are not shown for simplicity of illustration.

The fuel supply system further includes a meter of the intake air quantity 7 (flowmeter) and a solenoid valve for exhaust gas recirculation 8 (EGR), both connected with respective control loops to the electronic unit 3. The solenoid valve 8 is fed back in a way known per se, by means of the signals coming from the air quantity meter 7.

Reference numeral 9 designates an external electronic computer (PC) which is adapted to be connected with the electronic unit 3 by means of a connector 10 of which such unit is conventionally provided for.

The computer 9 is programmed so as to determine, as a function of the different environmental and operative parameters detected by the sensor operatively associated with the supply system, the optimum percentage of CO₂ concentration. The fuel density is also comprised within such parameters.

As previously clarified, a direct relationship subsists between the air-fuel ratio and the concentration of C02 in the exhaust gas. Such a concentration is detected, according to the invention, by means of a sensor 12 connected to the computer 9 and for instance constituted, in a way known per se, by a infrared ray absorbing recorder.

Through the comparison between the concentration of CO₂ measured in the exhaust gas by sensor 12 and the theoretical one (normally around 4%), the electronic unit 3 is set by means of computer 9 so as to regulate one of the parameters, related either to the amount of the fuel injected by the injection pump or to the amount of air intaken by the engine, controlled by the unit 3.

Such a parameter is preferably constituted by the regulation of the exhaust gas recirculation solenoid valve 7, or alternatively by the setting of the intake air quantity meter (8) (which in turn feeds back the solenoid valve 7), or by the position of the regulating slider of the injection pump 1. In all three cases the electronic unit 3 is then set for a value of the corresponding parameter (which can be different from the one pre-set by the manufacturer of the supply system before installation of the engine on board the vehicle), equal to the optimum concentration of CO₂ in the exhaust gas.

In practical terms the setting cycle, which can be easily carried out at the end of the assembly line of the vehicle equipped with the supply system, or during maintenance thereof, consists of connecting the computer 9 to the electronic unit 3 by means of connector 10 and, after warming the engine up to a predetermined temperature of the cooling liquid, maintaining the rotation speed of the engine at elevated idle speed (for instance around 2000 rpm).

Measurement of CO₂ concentration in the exhaust gas is then carried out by means of detector 12.

If the measured concentration value does not correspond to the reference value, the computer 9 performs adjustment of the electronic unit 3, intervening on the selected regulation parameter (for instance setting of the exhaust gas recirculation solenoid valve 7), and possibly even in a combined way on more than one of the parameters, until the concentration of C02 detected by sensor 12 reaches the above reference value which, as already stated, is around 4% for instance between 3,5 and 3,7 %.

## Claims

1. A method for the adjustment of an electronic control supply system for the fuel supply to a diesel-cycle engine installed on a motorvehicle, wherein said supply system comprises:
- an electronically controlled injection pump (1) having regulator means (2) of the fuel rate of flow,
- sensor means of operative parameters and working conditions of the engine (4, 7, 8), including engine rotation speed, intake air quantity and exhaust gas recirculation,
- an electronic unit (3) operatively connected to said pump and sensor means and adapted to control functions related to the amount of fuel injected by the said injection pump (1),
- characterized in that it comprises the following steps:
- starting and warming up the engine,
- maintaining the engine rotation speed at elevated idle speed,
- measuring the concentration of CO₂ within the engine exhaust gas,
- comparing the value of the measured CO₂ value with a reference value and obtaining from the comparison a difference, if any,
- modifying at least one of the said functions controlled by the electronic unit (3) by means of a corresponding setting thereof, until the said difference is substantially annulled.

2. A method according to claim 1 wherein the supply system comprises an exhaust gas recirculation circuit including a control solenoid valve (7), characterized in that the said function controlled by the electronic unit (3) is the setting of the said solenoid valve (7).

3. A method according to claim 1 wherein the supply system comprises an intake air amount meter (8) and an exhaust gas recirculation circuit fed back by the said intake air amount meter (8), characterized in that the said function controlled by the electronic unit (3) is the setting of the said air amount meter (8).

4. A method according to claim 1, wherein the injection pump (1) is provided with an electromagnetically controlled regulator (2) for the metering of the amount of injected fuel, characterized in that the said function controlled by the electronic unit (3) is the position of the said regulator (2).

5. A method according to any of the preceding claims, characterized in that the said elevated idle speed of the engine corresponds to operating areas wherein the air-fuel ratio stored in the maps of the electronic unit (3) is constant.

6. A method according to any of the preceding claims, characterized in that the said CO₂ reference value, which is variable as a function of the fuel density, corresponds to a concentration of about 4%.

## Patentansprüche

1. Verfahren zum Einstellen eines elektronisch gesteuerten Zuführsystems für die Kraftstoffzufuhr zu einem Dieselmotor, der in ein Kraftfahrzeug eingebaut ist, wobei das Zuführsystem folgendes aufweist:
- eine elektronisch gesteuerte Einspritzpumpe (1) mit einer Reguliereinrichtung (2) für die Kraftstoff-Strömungsrate,
- Sensoreinrichtungen für Betriebsparameter und Arbeitsbedingungen des Motors (4, 7, 8), welche die Motor-Rotationsgeschwindigkeit, die Ansaugluftmenge sowie die Auspuffgas-Rezirkulation beinhalten,
- eine elektronische Einheit (3), die mit der Pumpe und den Sensoreinrichtungen betriebsmäßig verbunden ist und dazu ausgelegt ist, Funktionen zu steuern, die mit der Menge des durch die genannte Einspritzpumpe (1) eingespritzten Kraftstoffs in Beziehung stehen,
- **dadurch gekennzeichnet**,
daß das Verfahren folgende Schritte aufweist:
- Starten und Warmlaufenlassen des Motors,
- Halten der Motor-Rotationsgeschwindigkeit auf einer erhöhten Leerlaufdrehzahl,
- Messen der Konzentration von CO_{**2**} in dem Motorabgas,
- Vergleichen des Werts des gemessenen CO_{**2**}-Werts mit einem Bezugswert sowie aus dem Vergleich erfolgende Bildung einer Differenz, falls vorhanden,
- Modifizieren wenigstens einer der genannten, von der elektronischen Einheit (3) gesteuerten Funktionen mittels einer entsprechenden Einstellung derselben, bis die genannte Differenz im wesentlichen aufgehoben ist.

2. Verfahren nach Anspruch 1, wobei das Zuführsystem einen Auspuffgas-Rezirkulationskreis aufweist, der ein Steuer-Elektromagnetventil (7) beinhaltet,
**dadurch gekennzeichnet**,
daß es sich bei der genannten, von der elektronischen Einheit (3) gesteuerten Funktion um die Einstellung des genannten Elektromagnetventils (7) handelt.

3. Verfahren nach Anspruch 1, wobei das Zuführsystem einen Ansaugluftmengenmesser (8) und einen Auspuffgas-Rezirkulationskreis aufweist, der durch den genannten Ansaugluftmengenmesser (8) rückgekoppelt ist,
**dadurch gekennzeichnet**,
daß es sich bei der genannten, von der elektronischen Einheit (3) gesteuerten Funktion um die Einstellung des genannten Luftmengenmessers (8) handelt.

4. Verfahren nach Anspruch 1, wobei die Einspritzpumpe (1) mit einer elektromagnetisch gesteuerten Reguliereinrichtung (2) zum Dosieren der Menge des eingespritzten Kraftstoffs handelt,
**dadurch gekennzeichnet**,
daß es sich bei der genannten, von der elektronischen Einheit (3) gesteuerten Funktion um die Position der genannten Reguliereinrichtung (2) handelt.

5. Verfahren nach einem der vorausgehenden Ansprüche,
**dadurch gekennzeichnet**,
daß die genannte erhöhte Leerlaufdrehzahl des Motors Betriebsbereichen entspricht, wobei das in den Verzeichnissen der elektronischen Einheit (3) gespeicherte Luft-Kraftstoff-Verhältnis konstant ist.

6. Verfahren nach einem der vorausgehenden Ansprüche,
**dadurch gekennzeichnet**,
daß der genannte CO₂-Bezugswert, der in Abhängigkeit von der Kraftstoffdichte variabel ist, einer Konzentration von ca. 4 % entspricht.

## Revendications

1. Un procédé de réglage d'un système de commande électronique de l'alimentation pour l'alimentation en combustible d'un moteur Diesel monté sur un véhicule automobile, ce système d'alimentation comprenant :
- une pompe d'injection (1) à commande électronique comportant des moyens de réglage (2) de la vitesse ou fréquence de combustible de l'écoulement,
- des moyens capteurs des paramètres de fonctionnement et des conditions de fonctionnement du moteur (4, 7, 8), incluant la vitesse de rotation du moteur, la quantité d'air d'admission et la recirculation des gaz d'échappement,
- une unité électronique (3) opérativement reliée à ladite pompe et aux moyens capteurs et adaptée pour commander des fonctions liées à la quantité de combustible injectée par ladite pompe d'injection (1),
caractérisé en ce qu'il comprend les opérations suivantes :
- faire démarrer et chauffer le moteur,
- maintenir la vitesse de rotation du moteur à une vitesse élevée de marche à vide,
- mesurer la concentration en CO₂ dans les gaz d'échappement du moteur,
- comparer la valeur de la valeur de CO₂ mesurée à une valeur de référence et obtenir à partir de la comparaison une différence, si il y en a,
- modifier au moins une desdites fonctions commandées par l'unité électronique (3) grâce à un réglage correspondant de celle-ci, jusqu'à ce que ladite différence soit sensiblement annulée.

2. Un procédé selon la revendication 1, selon lequel le système d'alimentation comprend un circuit de recirculation des gaz d'échappement comportant une vanne de commande à solénoïde (7), caractérisé en ce que la fonction précité commandée par l'unité électronique (3) et le réglage de la vanne à solénoïde précitée (7).

3. Un procédé selon la revendication 1 selon lequel le système d'alimentation comprend un mètre de la quantité d'air d'admission (8) et un circuit de recirculation des gaz d'échappement réintroduits par le mètre de quantité d'air d'admission (8), caractérisé en ce que la fonction précitée commandée par l'unité électronique (3) est le réglage dudit mètre de quantité d'air (8).

4. Un procédé selon la revendication 1, dans lequel la pompe d'injection (1) est pourvue d'un régulateur (2) commandé électromagnétiquement pour la mesure de la quantité des combustibles injectés, caractérisé en ce que la fonction précitée commandée par l'unité électronique (3) est constituée par la position dudit régulateur (2).

5. Un procédé selon l'une des revendications précédentes, caractérisé en ce que la vitesse élevée à marche libre précitée du moteur correspond aux zones de fonctionnement auxquelles le rapport air-combustible stocké sur les cartes de l'unité électronique (3) est constante.

6. Un procédé selon l'une des revendications précédentes, caractérisé en ce que la valeur de référence de C02 précitée qui est variable comme fonction de la densité de combustible correspond à une concentration d'environ 4%.
